# EUROPEAN PATENT SPECIFICATION

(11) **EP 4 604 480 B1**
(45) Date of publication and mention of the grant of the patent: **22.07.2026**
(21) Application number: 24157787.3
(22) Date of filing: 15.02.2024
(51) Int. Cl.: H04L 41/147, H04L 41/16, H04L 43/0817, H04L 43/0876, H04L 47/00

(54) **METHOD FOR PREDICTING AND/OR DETECTING CONTROL SIGNALLING HAVING A RISK OF AT LEAST PARTIALLY OVERLOADING A MOBILE COMMUNICATION NETWORK**
VERFAHREN ZUR VORHERSAGE UND/ODER ERKENNUNG EINER STEUERSIGNALISIERUNG MIT GEFAHR EINER ZUMINDEST TEILWEISEN ÜBERLASTUNG EINES MOBILEN KOMMUNIKATIONSNETZES
PROCÉDÉ DE PRÉDICTION ET/OU DE DÉTECTION DE SIGNALISATION DE COMMANDE PRÉSENTANT UN RISQUE DE SURCHARGE AU MOINS PARTIELLE D'UN RÉSEAU DE COMMUNICATION MOBILE

(43) Date of publication of application: 20.08.2025
(73) Proprietor: NTT DOCOMO, INC., Tokyo 100-6150 (JP)
(72) Inventor: BAKHSHI, Bahador, 80687 Munich (DE); SAMA, Malla Reddy, 80687 Munich (DE); GUERZONI, Riccardo, 80687 Munich (DE); TANAKA, Itsuma, 80687 Munich (DE); MINOKUCHI, Atsushi, Tokyo 100-6150 (JP)
(74) Representative: Viering, Jentschura & Partner mbB Patent- und Rechtsanwälte

(56) References cited:
- CN-A- 117 527 612
- NASSIMA TOUMI ET AL: "New solution: NWDAF-assisted policy control for network abnormal behaviours mitigation", vol. 3GPP SA 2, no. Athens, GR; 20240226 - 20240301, 13 February 2024 (2024-02-13), XP052565935, Retrieved from the Internet <URL:https://www.3gpp.org/ftp/tsg_sa/WG2_Arch/TSGS2_161_Athens_2024-02/Docs/S2-2402012.zip S2-2402012_New_Sol_Abnormal_Behaviour_Mitigation.doc> [retrieved on 20240213]
- "3rd Generation Partnership Project; Technical Specification Group Services and System Aspects; Architecture enhancements for 5G System (5GS) to support network data analytics services (Release 18)", no. V18.4.0, 19 December 2023 (2023-12-19), pages 1 - 318, XP052552980, Retrieved from the Internet <URL:https://ftp.3gpp.org/Specs/archive/23_series/23.288/23288-i40.zip 23288-i40.docx> [retrieved on 20231219]
- "3rd Generation Partnership Project; Technical Specification Group Services and System Aspects; Study on Core Network Enhanced Support for Artificial Intelligence (AI)/Machine Learning (ML) (Release 19)", no. V0.1.0, 2 February 2024 (2024-02-02), pages 1 - 14, XP052577106, Retrieved from the Internet <URL:https://ftp.3gpp.org/Specs/archive/23_series/23.700-84/23700-84-010.zip draft_23700-84_010_r2_RM.docx> [retrieved on 20240202]
- BAHADOR BAKHSHI ET AL: "KI#4: New Sol: NWDAF analytics for signalling storm prediction", vol. 3GPP SA 2, no. Changsha, Hunan Province, CN; 20240415 - 20240419, 22 April 2024 (2024-04-22), XP052601256, Retrieved from the Internet <URL:https://www.3gpp.org/ftp/tsg_sa/WG2_Arch/TSGS2_162_Changsha_2024-04/Docs/S2-2405566.zip S2-2405566 was 2405031 - KI #4, New Merger Solution of Signaling Storm Mitigation - Copy.docx> [retrieved on 20240422]

## Description

The present disclosure relates to methods for detecting control signalling having a risk of at least partially overloading a mobile communication network.

The signalling load in a mobile communication system may fluctuate strongly. Spikes of signalling load, so-called (control plane) signalling storms, may be caused due to errors (e.g. a error being introduced in a policy), attacks or other exceptional events like for example a lot of devices (e.g. IoT (Internet of Things) devices) being connected at the same time, e.g. when a batch of IoT devices is being deployed. Such events may lead to overload of parts of the mobile communication network which may result in service failure, outages and thus for example bad user experience and SLA (Service Level Agreement) penalties for the network operator. Therefore, effective approaches for proactively predicting and detecting control signalling having a risk of at least partially overloading a mobile communication network and possibly mitigating the same, are desirable to minimize the service outage time or ideally avoid it.

NASSIMA TOUMI ET AL: "new solution: NWDAF-assisted policy control for network abnormal behaviours mitigation", 3GPP DRAFT; S2-2402012; TYPE PCR; FS_AMIL_CN, 3RD GENERATION PARTNETSHIP PROJECT (3GPP), MOBILE COMPETENCE CENTRE; 650, ROUTE DES LUCIOLES; F-06921 SOPHIA-ANTIPOLIS CEDEX; FRANCE, vol. 3GPP SA 2, no. Athens, GR; 20240226 - 20240301 13 FEBURARY 2024 (2024-02-13), XP052565935, discloses a procedure to enable NWDAF-assisted (Network Data Analytics Function) policy control for network abnormal behaviours mitigation.

"3rd Generation Partnership Project; Technical Specification Group Services and System Aspects; Architecture enhancements for 5G System (5GS) to support network data analytics services (Release 18)", 3GPP STANDARD; TS23.288, 3RD GENERATION PARTNETSHIP PROJECT (3GPP), MOBILE COMPETENCE CENTRE; 650, ROUTE DES LUCIOLES; F-06921 SOPHIA-ANTIPOLIS CEDEX; FRANCE, no. V18.4.0 19 December 2023 (2023-12-19), pages 1-318, XP052552980, discloses provisions of network analytics indicating an abnormal behaviour of a group of UEs (User Equipment) or a specific UE.

"3rd Generation Partnership Project; Technical Specification Group Services and System Aspects; Study on Core Network Enhanced Support for Artificial Intelligence Aspects (AI)/Machine Learning (ML) (Release 19)", TECHNICAL REPORT; 3GPP TR 23.23.700-84, 3RD GENERATION PARTNETSHIP PROJECT (3GPP), MOBILE COMPETENCE CENTRE; 650, ROUTE DES LUCIOLES; F-06921 SOPHIA-ANTIPOLIS CEDEX; FRANCE, no. v0.1.0. 2 FEBRUARY 2024 (2024-02-02, pages 1-14, XP052577106, describes a use case for NWDAF assistance in device signalling storm prevention and mitigation if an application on a NB-IoT UE (Narrow Band Internet of Things) is not implemented correctly.

### Summary of the Invention

According to a first aspect of the present invention, a method for predicting and/or detecting control signalling having a risk of at least partially overloading a mobile communication network is provided including the features of claim 1. According to a second aspect of the present invention, an overload detection and mitigation system of a mobile communication network is provided including the features of claim 11. According to a third aspect a computer program and a computer readable medium is provided according to claim 14. Additional features for advantageous embodiments of the present invention are provided in the dependent claims.

### Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile communication system, in this example a 5G communication system.
- Figure 2: illustrates a signalling storm on the N1 reference point for registration operations.
- Figure 3: illustrates a signalling storm on N11 reference point for PDU (Protocol Data Unit) session establishment service operations.
- Figure 4: illustrates a signalling storm on N33 reference point for exposure service operations.
- Figure 5: illustrates a signalling storm on N4 reference point for session update service operations.
- Figure 6: shows a flow diagram illustrating an abnormal signalling pattern prediction and/or detection and mitigation.
- Figure 7: illustrates the flow of figure 6 for detection of a UE (User Equipment) registration signalling storm (corresponding to figure 2).
- Figure 8: illustrates the flow of figure 6 for detection of a PDU establishment signalling storm (corresponding to figure 3).
- Figure 9: illustrates the flow of figure 6 for detection of an AF (Application Function) request signalling storm (corresponding to figure 4).
- Figure 10: illustrates two alternatives how a mitigation mechanism may be triggered according various embodiments.
- Figure 11: shows a flow diagram illustrating a method for detecting control signalling having a risk of at least partially overloading a mobile communication network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

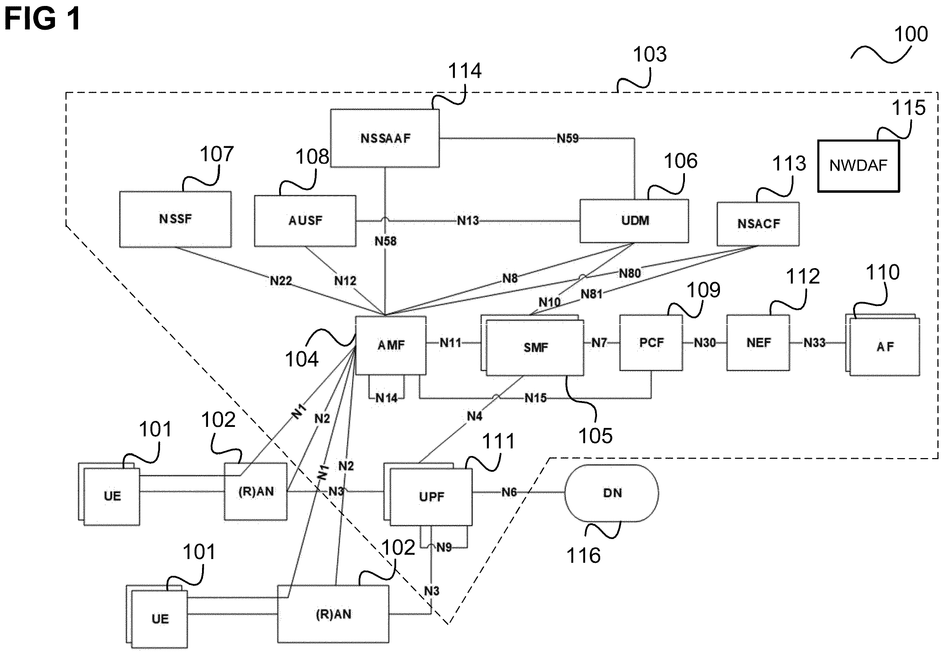

Figure 1 shows a mobile communication system 100, in this example a 5G communication system.

The mobile communication system 100 comprises multiple UEs 101 (on the terminal side) and, on the network side
- Multiple (radio) access networks 102
- A core network 103 comprising, (core) network functions (NFs) such as
   o Access and Mobility Management Function (AMF) 104
   o Session Management Function (SMF) 105
   o Unified Data Management (UDM) 106
   o Network Slice Selection Function (NSSF) 107
   o Authentication Server Function (AUSF) 108
   o Policy Control Function (PCF) 109
   o Application Function (AF) 110
   o User Plane Function (UPF) 111
   o Network Exposure Function (NEF) 112
   o Network Slice Admission Control Function (NSACF) 113
   o Network Slice-Specific Authentication and Authorization Function 114
   o Network Data Analytics Function (NWDAF) 115 (here shown without connection to the other core network functions for simplicity but it may actually be connected to almost any of the above)
- A data network 116

The core network functions are connected to each other via reference points (N11, N7, N30 etc.). Further, the RANs 102 are connected to the AMF 104 (or each to a respective AMF 104) via the reference point N2 and the mobile terminals 101 are connected to the AMF 104 (through the RANs 102) via the reference point N1.

In a communication system like the one of figure 1, a so-called signalling storm may occur, i.e. a high amount of control signalling that may overload a component.

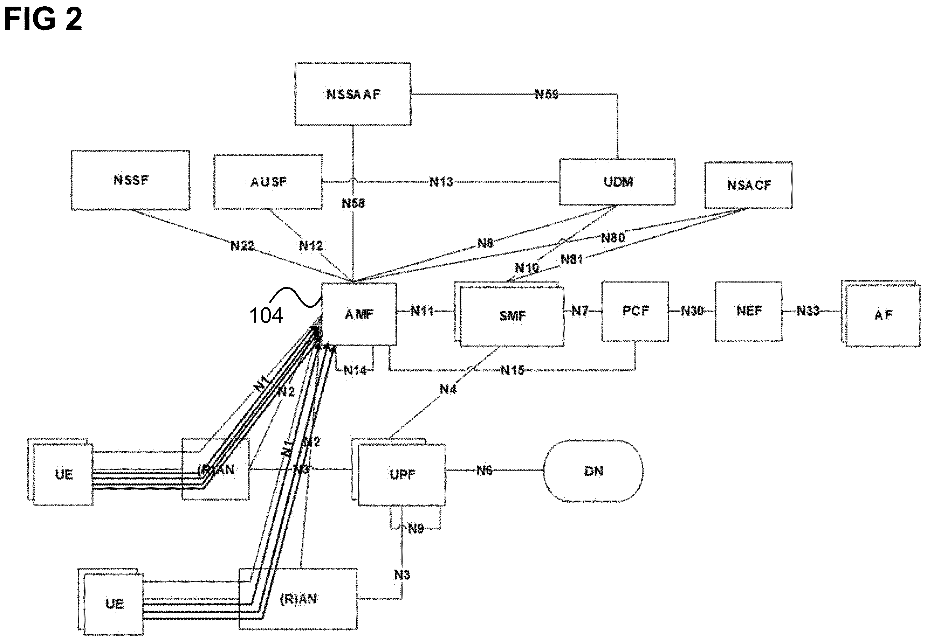

Figure 2 illustrates a signalling storm on the N1 reference point for registration operations.

There is a very high number or UE registration requests (e.g. occurring due to IoT (Internet of Things) device registration) leading to that the AMF 104 is overloaded.

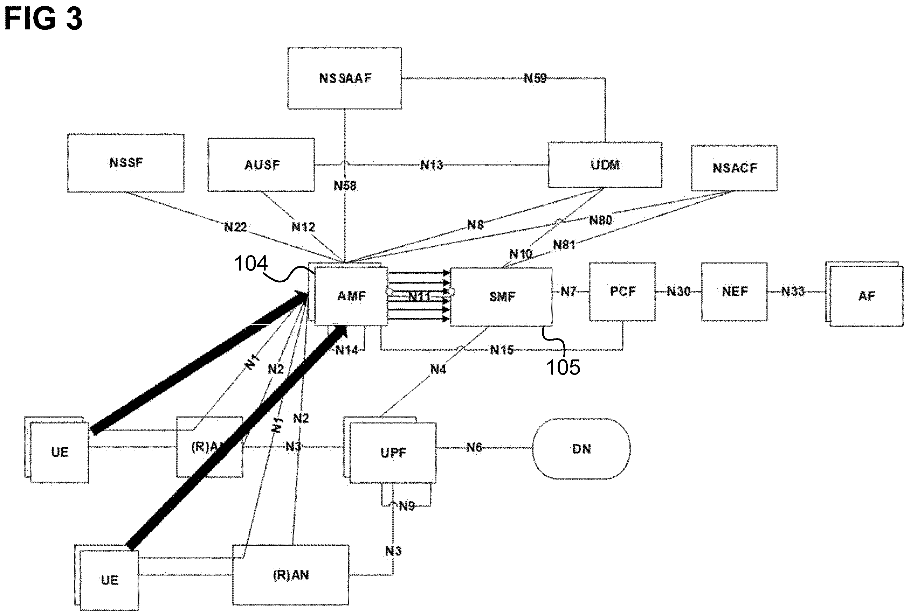

Figure 3 illustrates a signalling storm on N11 reference point (between AMF 104 and SMF 105) for PDU (Protocol Data Unit) session establishment service operations.

There is a very high number of PDU establishment requests (e.g. occurring due to many IoT devices reporting an event) leading to that the SMF 105 is overloaded.

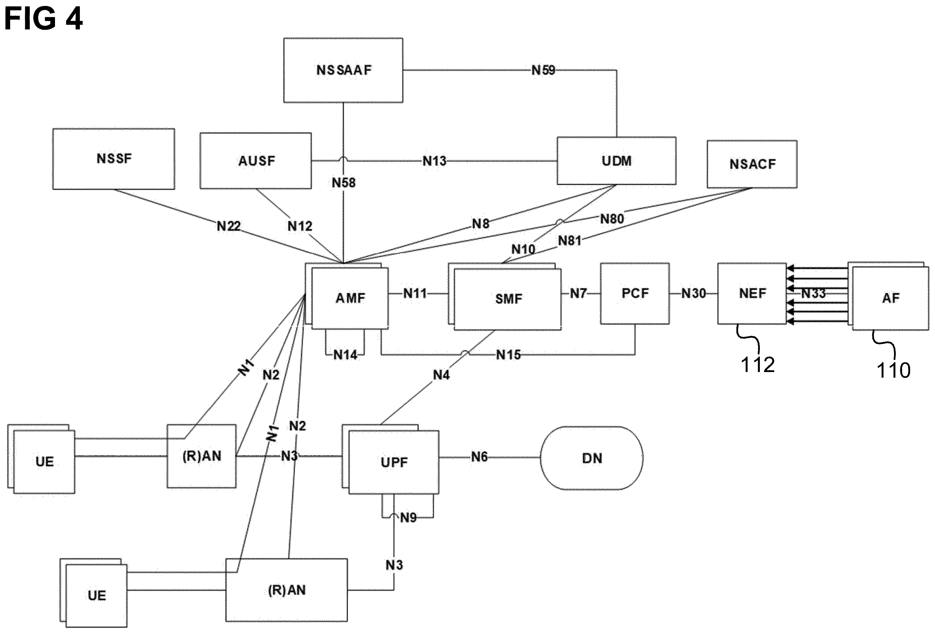

Figure 4 illustrates a signalling storm on N33 reference point (between AF 110 and NEF 112) for exposure service operations.

There are a very high number of AF requests leading to that the NEF 112 is overloaded.

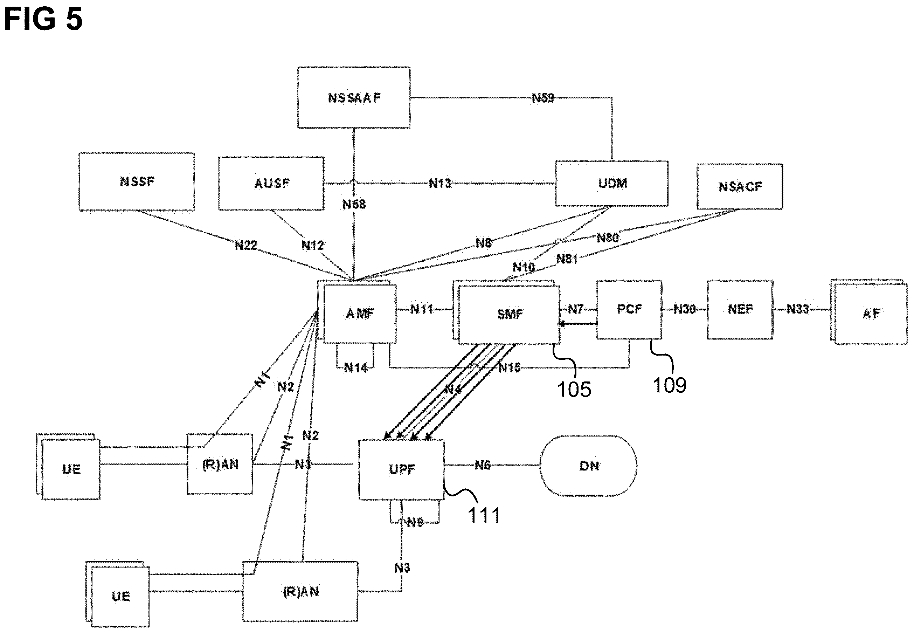

Figure 5 illustrates a signalling storm on N4 reference point (between SMF 105 and UPF 111) for session update service operations.

There is a very high number of session updates by the SMF 105 (e.g. caused by an abnormal PCF 109 creating a faulty policy update which it signals to the SMF 105) leading to that the UPF 111 is overloaded.

For a mobile network operator (MNO) it is typically desirable to be able to handle (i.e. predict and avoid) signalling storms. Ideally, this happens in a way that there is no or only little failure and disruption of the respected service (that might be caused by an overload) such that down-time of a component affected by a signalling storm is in the range of minutes or seconds rather than hours.

In view of the above, according to various embodiments an approach is defined to proactively protect mobile communication network components (or "entities"), in particular on the network side (e.g. in the core network) against signalling storms, i.e. to predict the signalling storm and take measures before a signalling storm actually happens (or at least mitigate its effects when it happens). According to various embodiments, this is done using the Network Data Analytics Function (NWDAF) 115 which is provided with (or collects or gathers) and/or stores information to enable appropriate predictions (or decisions).

Specifically, according the various embodiments, an NWDAF-based signalling storm prediction and detection (and possibly mitigation) is provided which includes
1) Usage of one or more machine learning (ML) models for abnormality prediction and detection
2) Determination of a signalling pattern (e.g., rate of requests, rate of responses, ...) of control plane communication (e.g. request/response or subscribe/notify pattern of service operations) between mobile network (i.e. network side) components and interpreting a detected abnormality of a signalling pattern (e.g. by one of the ML models) as an indication of a (impeding or already occurring) signalling storm, i.e. treating an abnormal control plane signalling pattern as an indication of a signalling storm
3) Mobile network components (e.g. NFs) monitor control plane signalling to report metrics (e.g. measurement values) and detect certain operational patterns (of themselves) and possibly also control plane signalling patterns.

For example, a ML model is trained (by NWDAF 115) to predict and/or detect abnormal control plane signalling patterns in a specific reference point between two mobile network components (e.g. between two NFs of the core network 103 (e.g. 5GC)) based on the control plane signalling (i.e. control signalling traffic) metrics and an unexpected (i.e. exceptional) signalling pattern notification provided by one or both of the mobile network components (or others). The two mobile network components (one acting as service producer (or "producer"), one as service consumer) and other entities of the mobile communication system (e.g., Operation, Administration and Maintenance (OAM) or SCP (Service Communication Proxy), both not shown in figure 1 but which may be part of the communication system) may subscribe to the analytics provided by NWDAF 115. In the case of prediction and/or detection of an abnormal signalling pattern by the NWDAF 115, the NWDAF 115 notifies the subscribed entities which may then take appropriate mitigation actions (e.g. as they conventionally exist in communication systems).

So, according to various embodiments, the NWDAF 115 performs analytics to predict and/or detect abnormal control plane signalling patterns by an ML model trained on the metrics of signalling traffic in addition with unexpected pattern notification provided by one or more mobile network components (e.g. NFs).

The NWDAF 115 can thus detect early or predict an abnormal signalling (or communication) pattern, i.e. abnormality of control plane signalling between two mobile network components (e.g. of request/subscribe and response/notifies messages). For this abnormality prediction and/or detection problem, the NWDAF 115 uses one or more ML models to provide analytics (e.g. assigned a newly introduced analytics ID) for control plane signalling patterns of service operation in reference points. These analytics can then trigger (e.g. initiated by the NWDAF 115 or by a notification of the analytics to another component) a mitigation action by various entities, e.g.
- the service producer, e.g. using, as mitigation mechanisms, request throttling, back-pressure, connection pooling, ...
- the service consumer, e.g. using, as mitigation mechanisms, request throttling, NF reselection, ...
- OAM, e.g. using, as mitigation mechanisms, horizontal/vertical scaling, ...
- SCP, e.g. using, as mitigation mechanisms, request throttling, back-pressure, connection pooling, ...
- RAN, e.g. using, as mitigation mechanisms, NF reselection, access barring, ...

In the following, it is assumed that one or more mobile network components (e.g. NFs), e.g. involved in a possible signalling storm, can measure and report metrics about control plane traffic (related to their corresponding service operations) e.g., the number of request/subscribe sent/received in a time window, the number of the response/notify sent/received in a time window, timing information of the service/response, and information about error numbers such as number of rejected requests, number of timeout request and that they can detect a certain (in particular unexpected) operational pattern (with respect to their service operations, e.g. number of messages, service provision instances, a buffer level, a load level, rate of memory allocation, rate of packet drops, rate of thread/process creation, (disk) I/O operation latency, number of TCP/UDP sockets, etc. being above a respective predetermined threshold, wherein the thresholds are for example determined as defining the value ranges when there is normal operation, i.e. no signalling storm).

The NWDAF 115 trains an ML model for detecting abnormalities in the signalling pattern between mobile network components, i.e. it collects (gathers) information of the (main) services of each of multiple considered reference points between two entities (mobile network components) and information of the entities and optionally asks each (or at least some) of them to (optionally) activate an internal operational pattern detection mechanism, i.e. a pattern of information (e.g. values or operational metrics) regarding the mobile network component's internal operation which for example includes one or more of
- the number of request/subscription, the number of responses/notifies in a time window, the rate of service/response, timing information of the service/response, and information about error numbers such as number of rejected requests, number of timeout request, ...
- Number of active (ongoing) requests/subscribe (i.e. in general of active (i.e. currently handled) service provision instances)
- Operational metrics such as load information, a buffer level, a load level, rate of memory allocation, rate of packet drops, rate of thread/process creation, (disk) I/O operation latency, number of TCP/UDP sockets, etc.

When a mobile network component detects an unexpected operational pattern it notifies the NWDAF 115.

At least some of the mobile network components (e.g. one or both of those involved in a possible signalling storm, i.e. being connected by the considered reference point) continuously monitor the traffic (for metrics regarding the control signalling) and the NWDAF collects the service control signalling metrics. The control signalling metrics (i.e. metrics about control plane traffic) and the unexpected pattern notifications possibly provided by one or more of the mobile network components are given as inputs to the ML model to detect an abnormal control signalling pattern.

The NWDAF 115 for example outputs (e.g. as analytics "for control plane signalling patterns of service operation in reference points") at least some of the following:
- Source/destination NFs
- Reference point & service operation
- An identification of one of the following abnormalities (or exceptions):
   ∘ Too many requests
   ∘ Too many parallel requests (without response)
   ∘ Too few responses
   ∘ Too late responses
   ∘ Too inconsistent response times
   ∘ Too many request rejections
   ∘ Too many request timeout
   ∘ Unexpected message pattern

The NWDAF 115 may also provide as output the information that an exception has been resolved.

The identification of the exception is for example what the ML model (e.g. trained for a specific reference point) outputs, e.g. in terms of a classification in one of these classes (i.e. exceptions) and an additional "no exception" class.

The service producer and the service consumer of the considered reference point and/or other entities may have the capability to monitor the controlling signalling traffic and detect operational patterns in their operation (sequence of messages, resources usages, ...) via e.g.,
- their internal logic (i.e. NF internal logic)
- a set of configurations sent by the OAM
- usage of an ML model trained by the NWDAF 115 and shared with them, i.e. mobile network components may perform inference

As mentioned above, if a mobile network component detects an unexpected operational pattern, it sends a notification to the NWDAF 115. This triggers ML based signalling pattern detection in the NWDAF 115 (using the ML model) and the notification (i.e. any information it contains, i.e. information about the unexpected operational pattern) may also be used as an input to the ML model, i.e. the ML model is according to one embodiment trained to predict an abnormal control signalling using (among other input data) operational information from one or more of the entities connected by the considered reference point. So, one or more notifications about unexpected operational patterns may be (or include) assistance (input) data for the abnormal signalling pattern detection.

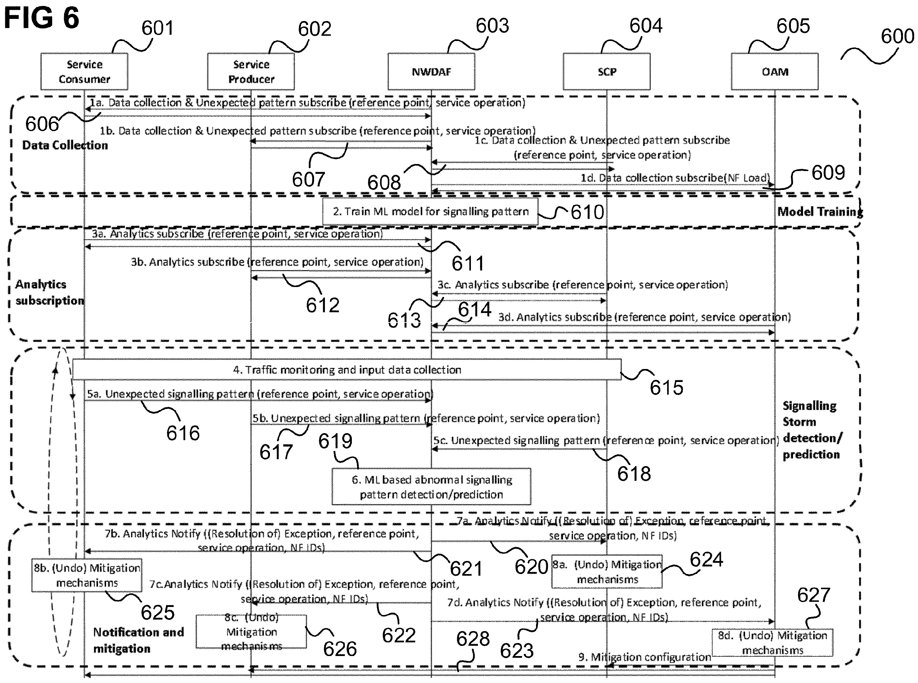

Figure 6 shows a flow diagram 600 illustrating an abnormal signalling pattern (i.e. signalling storm) detection and mitigation.

A service consumer 601, a service producer 602, an NWDAF 603, an SCP 604 and an OAM 605 are involved in the flow.

In 606, 607, 608 the NWDAF 603 performs data collection from the service consumer 601, the service producer 602 and the SCP 603, respectively, and subscribes to being notified about an unexpected operational pattern of the service consumer 601, the service producer 602 and the SCP 604, respectively. In doing so, the NWDAF 603 indicates the considered reference point and service operation (for which it wants to receive traffic data and being notified about unexpected operational pattern).

In 609, the NWDAF 603 performs data collection from the OAM 605 and subscribes to being notified about network function load (in particular at least one of the service consumer 601 and the service producer 602 or possibly both if both are network functions).

In 610, the NWDAF 603 trains an ML model to detect an abnormal signalling pattern (e.g. one of the exceptions given above) using the collected data as training data.

In 611, 612, 613 and 614 the service consumer 601, the service producer 602, the SCP 604 and the OAM 605 subscribe at the NWDAF 603 for analytics regarding the reference point and the service operation (which they indicate in the subscription), e.g. to be notified about the prediction and/or detection of an abnormal control signalling pattern. It should be noted that detection of an abnormal signalling pattern may mean that control (plane) signalling which potentially causes overload (i.e. has a risk of at least partially overloading the communication network, i.e. of overloading one or more components (in particular network functions) of the communication network) is predicted and/or detected, i.e. a (control) signalling storm is detected (when it is already there) or predicted (when it is not already there but is imminent, i.e. there is a risk that it occurs), i.e. the detection of the abnormal signalling pattern may be seen as prediction of a control signalling (storm) which overloads one or more components of the network.

In 615, the service consumer 601, the service producer 602, the NWDAF 603 and the SCP 604 monitor the traffic on the considered reference point (regarding the considered service operation) and thus gather input data for the machine learning model.

When in 616, 617 or 618 the service consumer 601, the service producer 602 or the SCP 604, respectively, notifies the NWDAF 603 about an unexpected operational pattern, the NWDAF 603 in 619 performs abnormal signalling pattern detection using the (trained) machine learning model using the gathered input data (e.g. gathered within a certain time window before the notification).

In 620, 621, 622 and 623 the NWDAF 603 informs the SCF 604, the service consumer 601, the service producer 602 and the OAM 605, respectively, about the result of the abnormal signalling pattern detection, i.e. in particular as the case may be an exception, and, in case of an exception. In doing so it indicates the considered reference point and service operation as well as includes IDs of the involved mobile network components (e.g. NFs). Each of the SCF 604, the service consumer 601, the service producer 602 and the OAM 605 may then in 624, 625, 626 and 627, respectively, trigger a mitigation mechanism. In case of the OAM 605 this may include configuring the SCF 604, the service consumer 601 and the service producer 602 for mitigation in 628.

In case an exception has been resolved, the NWDAF 603 may similarly notify the SCF 604, the service consumer 601, the service producer 602 and the OAM 605. Instead of triggering the mitigation mechanism the mitigation mechanism is then undone (i.e. deactivated).

The monitoring of 615 and the following operations of figure 6 are repeatedly carried out.

In the following, three examples for the flow of figure 6 are given for different pairs of service producer and service consumer, corresponding to the signalling storms illustrated in figures 2, 3 and 4.

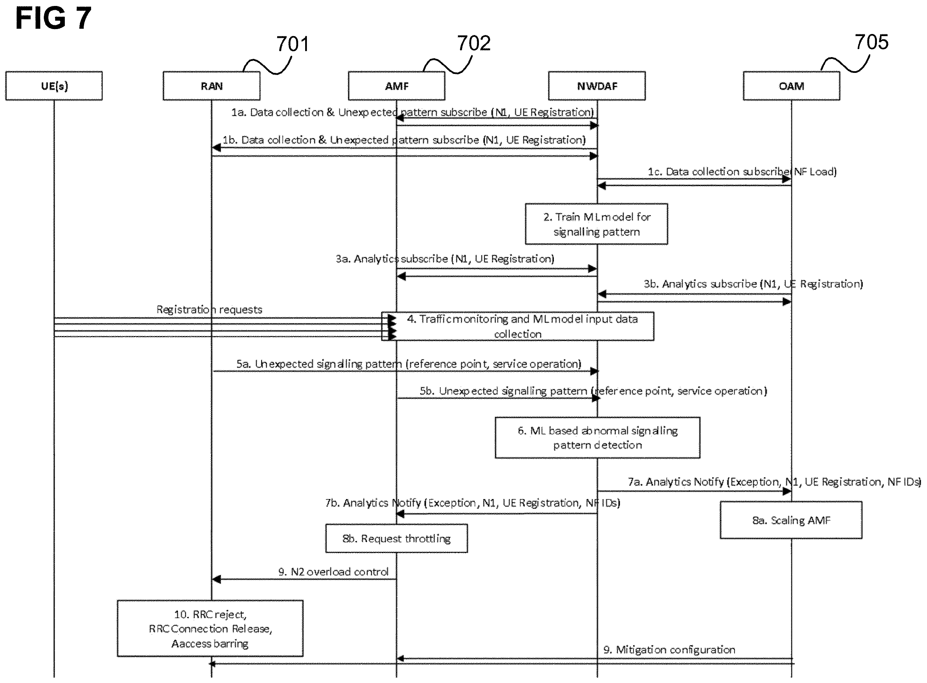

Figure 7 illustrates the flow of figure 6 for detection of a UE registration signalling storm (corresponding to figure 2).

The SCP 604 is not involved in this example. The considered reference point is N1 and the considered service operation is UE registration. The service consumer is the RAN 701 and the service producer is the AMF 702. The RAN 701 does in this example not subscribe to the analytics.

The mitigation mechanisms are in this case for example
- by the OAM 705: AMF scaling
- by the AMF 702: Request throttling (e.g., via NAS level congestion control) and N2 overload control (of the RAN 701)
- by the RAN 701: RRC reject, RRC Connection Release, Access barring

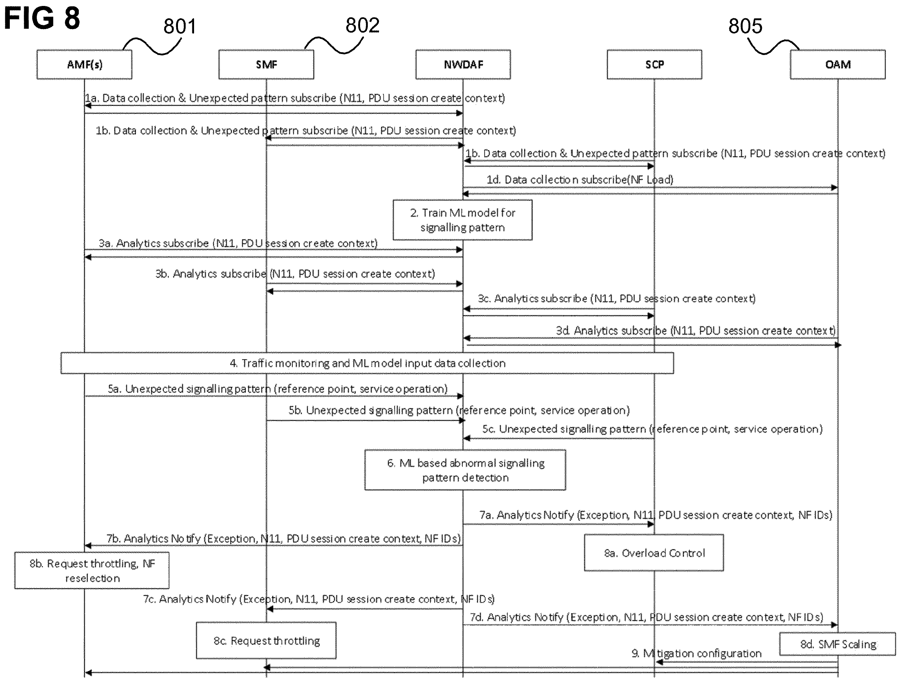

Figure 8 illustrates the flow of figure 6 for detection of a PDU establishment signalling storm (corresponding to figure 3).

The considered reference point is N11 and the considered service operation is PDU session create context. The service consumer is the AMF 801 (or multiple AMFs) and the service producer is the SMF 802.

The mitigation mechanisms are in this case for example
- by the OAM 805: SMF scaling
- by the SMF 802: Request throttling (NAS (Non-Access Stratum) level congestion control)
- by the AMF 801: Request throttling, NF reselection (NAS level congestion control)

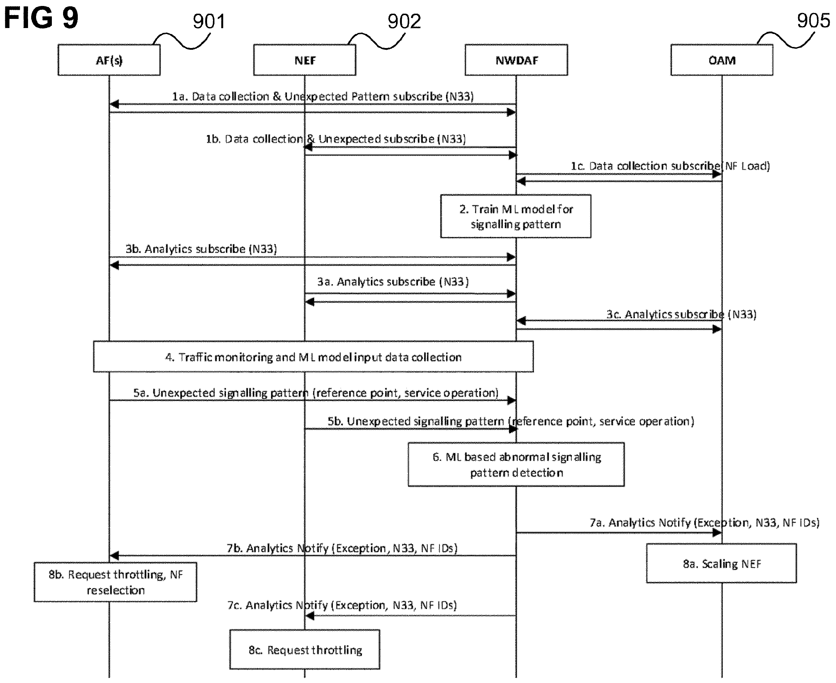

Figure 9 illustrates the flow of figure 6 for detection of an AF request signalling storm (corresponding to figure 4).

The SCP 604 is not involved in this example. The considered reference point is N33 (no service operation in this example). The service an AF 901 (or multiple AFs) and the service producer is the NEF 902.

The mitigation mechanisms are in this case for example
- by the OAM 905: NEF scaling
- by the NEF 902: Request throttling
- by the AF 901: Request throttling, NF reselection

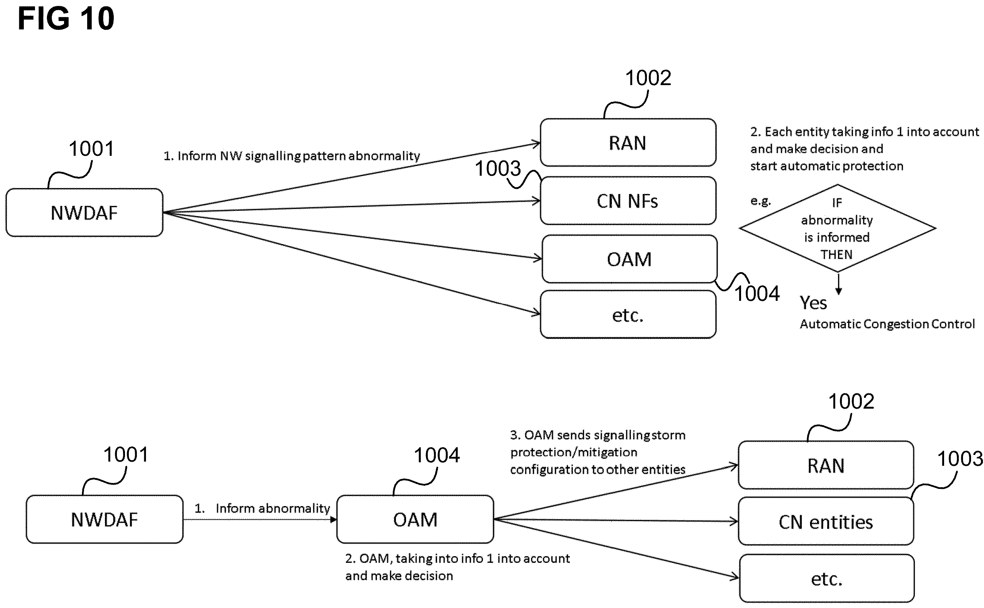

Figure 10 illustrates two alternatives how a mitigation mechanism may be triggered.

In a first option (shown in the top of figure 10), the NWDAF 1001 informs a communication system component, e.g. RAN 1002, any core entity (e.g. network function) 1003, the OAM 1004 or other about a control signalling abnormality. The respective component takes this information into account and makes a decision about starting an automatic mitigation (e.g. protection) mechanism, such as automatic congestion control.

Alternatively, in the second option (shown in the bottom of figure 10), the NWDAF 1001 informs the OAM 1004 about the control signalling abnormality, the OAM 1004 takes this information into account and makes a decision about starting an automatic mitigation and configures one or more of the other entities, e.g. RAN 1002, any core entity(s) (e.g. network function(s)) 1003 or other to perform the mitigation (e.g. protection), see as an example step 628 of figure 6.

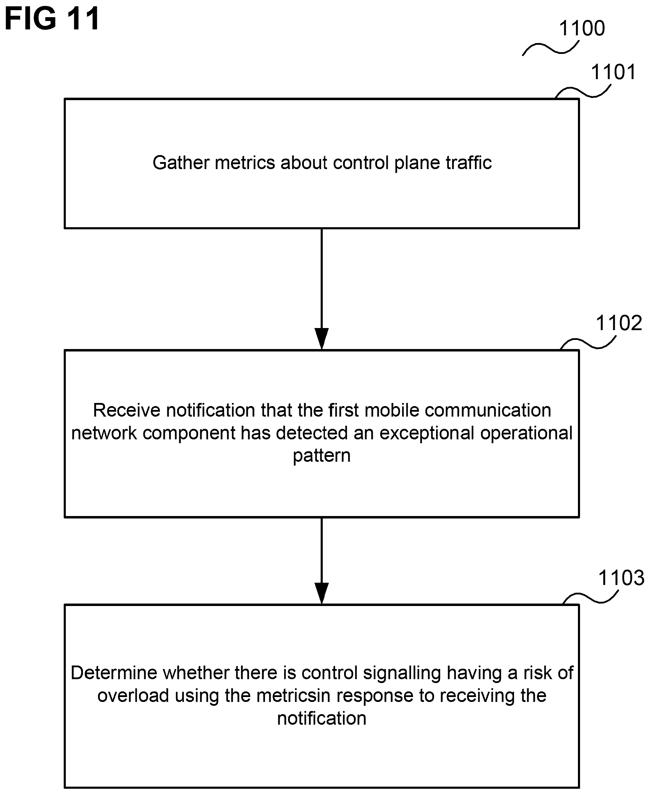

In summary, according to various embodiments, a method is provided as illustrated in figure 11.

Figure 11 shows a flow diagram 1100 illustrating a method for predicting and/or detecting control signalling (e.g. control plane signalling) having a risk of at least partially overloading a mobile communication network.

In 1101, metrics about (e.g. characterizing an amount or intensity of) control plane traffic between a first mobile communication network component and one or more second mobile communication network components of the mobile communication network are gathered (e.g. by monitoring or subscribing to one or more components providing that kind of metrics).

In 1102, a notification is received (e.g. from the first mobile communication network component), that the first mobile communication network component has detected an exceptional (in other words: unexpected) operational pattern. Each of the one or more second mobile communication network components may analogously notify about its operational pattern.

In 1103, in response to (i.e. in reaction to) receiving the notification, it is predicted and/or determined, using the metrics, whether there is control signalling having a risk of overloading the first mobile communication network component and/or the one or more second mobile communication network components (e.g. whether there is an abnormal signalling pattern (e.g. of a certain service operation) which indicates a signalling storm (or imminent signalling storm)). This prediction and/or determination may be done by an ML model which is accordingly trained (to process the metrics and possibly also information included in the notification about the exceptional operational state and predict a certain control signalling (e.g. classify the control signalling into multiple classes, at least one of which has an overload risk)). The ML model may be trained specifically for one pair of communication network components, i.e. e.g. for a specific reference point (e.g. as in the above examples N1, N11, N33 or N4).

According to various embodiments, in other words, (control) signalling storm detection and/or prediction is done based on metrics of control plane traffic as well as a notification of an involved entity which has detected an unexpected operational state. Receiving such a notification triggers the actual detection/prediction process (e.g. inference by a ML model). Thus, resources for the detection/prediction process are only used when there is an actual indication that a signalling storm may occur or may be imminent (namely the notification of unexpected operational state). The approach of figure 11 allows early detection (or even prediction) of a signalling storm and can thus reduce service outage time. This may save resources, increase user experience etc.

The exceptional operational pattern may for example include an exceptional pattern of internal operation of the first mobile communication network component, in particular including internal info that is not exposed to NWDAF like buffer size, time to get information from a data base, rate of memory allocation, rate of packet drops, rate of thread/process creation, (disk) I/O operation latency, number of TCP/UDP sockets, etc.

For example, according to various embodiments, a communication system is provided comprising a first entity (e.g. NWDAF) that collects metrics of control plane request/response and/or subscribe/notify messages between second & third entities (e.g. two NFs) either directly from the entities or from a fourth entity (e.g. SCP) and asks the entities to activate unexpected traffic detection mechanism. The first entity trains an ML model to predict/detect the abnormalities of the control plane signalling between the second and third entities where inputs are the collected metrics and unexpected operational pattern notification from the second, third and fourth entities. The second, third and fourth entities and a fifth entity (e.g. OAM) subscribe to the first entity to be get notified in the case of detection of abnormal traffic pattern. The second, third and fourth entities monitor the control plane traffic to generate unexpected operational pattern notification and measure the metrics which are sent to the first entity to be used as input for inference by the ML model. The first entity notifies other entities in the case of predicting / detecting an abnormal signalling pattern which triggers mitigation action in those entities.

According to various embodiments, an overload detection and mitigation system of a mobile communication network is provided configured to perform the method for detecting control (plane) signalling having a risk of at least partially overloading a mobile communication network according to any one of the examples and embodiments described herein. As described above, the overload detection and mitigation system may for example include an NWDAF (doing the actual detection) and one or more other components (including the first communication network component, the second communication network component or a further communication network component), e.g. an (OAM, SMF, AMF, etc., being notified by the NWDAF and triggering, as the case may be, a mitigation.

The components of the communication network components may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A method (1100) for predicting and/or detecting control signalling having a risk of at least partially overloading a mobile communication network (100), comprising:
Gathering metrics (1101) by a specific mobile communication network component about control plane traffic between a first mobile communication network component (601) and one or more second mobile communication network components (602, 604) of the mobile communication network (100);
Receiving a notification (1102) by the specific mobile communication network component that the first mobile communication network component (601) has detected an exceptional operational pattern;
In response to receiving the notification, predicting and/or determining (1103) by the specific mobile communication network component, using the gathered metrics about control traffic and the detected exceptional operational pattern of the received notification, whether there is control signalling having a risk of overloading the first mobile communication network component (601) and/or the one or more second mobile communication network components (602, 604);
wherein the metrics includes one or more of a number and/or rate of request messages, a number and/or rate of response messages, a number and/or rate of subscribe messages, a number and/or rate of notification messages and a number and/or rate of request rejections; and
wherein the exceptional operational pattern is one or more of
a number and/or rate of messages received by the first mobile communication network component (601) from the one or more second mobile communication network components (602, 604) being above a predetermined signalling threshold;
a load of the first mobile communication network component (601) being above a predetermined load threshold;
a number of service provision instances of the first mobile communication network component (601) for the one or more second mobile communication network components (602, 604) being above a predetermined service provision threshold;
a message buffer level of the first mobile communication network component (601) being above a predetermined buffer level;
a rate of memory allocation of the first mobile communication network component (601) being a above predetermined memory allocation threshold; a rate of packet drops experienced by the first mobile communication network component (601) being above a predetermined packet drop threshold;
a rate of thread and/or process creation of the first mobile communication network component (601) being above a predetermined thread/process creation threshold;
a mass storage input/output latency of the first mobile communication network component (601) being above a predetermined input/output latency threshold; and
a number of transport control protocol and/or user datagram protocol sockets being above a predetermined socket threshold.

2. The method of claim 1, wherein the exceptional operational pattern is an exceptional operational pattern of the first mobile communication network component (601).

3. The method of claim 1 or 2, wherein the exceptional operational pattern includes an exceptional pattern of internal operation of the first mobile communication network component (601).

4. The method of any one of claims 1 to 3, wherein the exceptional operational pattern includes an exceptional signalling pattern of a signalling between the one or more second mobile communication network components (602, 604) and the first mobile communication network component (601).

5. The method of any one of claims 1 to 4, wherein the first mobile communication network component (601) is a core network function of a core network (103) of the mobile communication network (100) and/or wherein the one or more second mobile communication network components (602, 604) are core network functions of the core network (103) of the mobile communication network (100).

6. The method of any one of claims 1 to 4, wherein the first mobile communication network component (601) is a core network function of a core network (103) of the mobile communication network (100) and/or wherein the one or more second mobile communication network components are one or more component of a radio access network (102) of the mobile communication network (100).

7. The method of any one of claims 1 to 6, comprising predicting and/or determining whether there is control signalling having a risk of overloading the first mobile communication network component (601) and/or the one or more second mobile communication network components (602, 604) by means of a machine learning model.

8. The method of claim 7, wherein the machine learning model receives the metrics as input.

9. The method of claim 7 or 8, wherein the notification includes information about the exceptional operational pattern and wherein the machine learning model receives the information about the exceptional operational pattern as input.

10. The method of any one of claims 1 to 9, comprising, in case that is predicted and/or determined that there is control signalling having a risk of overloading the first mobile communication network component (601) and/or the one or more second mobile communication network components (602, 604), triggering a mitigation mechanism configured to reduce the load of the first mobile communication network component (601) and/or the one or more second mobile communication network components (602, 604).

11. An overload detection and mitigation system of a mobile communication network (100) configured to perform the method of any one of claims 1 to 10.

12. The overload detection and mitigation system of claim 11, comprising the specific mobile communication network component as a third communication network component (603) configured to perform the gathering of the metrics, the receiving of the notification and the predicting and/or determining whether there is control signalling having a risk of overloading the first mobile communication network component (601) and/or the one or more second mobile communication network components (602, 604) and configured to notify the first communication network component (601), the one or more second communication network components (602, 604) and/or a fourth communication network component (605) about a result of the prediction and/or determination.

13. The overload detection and mitigation system of claim 12, wherein the first communication network component (601), the one or more second communication network components (602, 604) and/or the fourth communication network component (605) are configured to, in case that it has been predicted and/or determined that there is control signalling having a risk of overloading the first mobile communication network component (601) and/or the one or more second mobile communication network components (602, 604), trigger a mitigation mechanism configured to reduce the load of the first mobile communication network component (601) and/or the one or more second mobile communication network components (602, 604).

14. A computer program and a computer readable medium including instructions, which, when executed by a computer, make the computer perform the method of any one of claims 1-10.

## Patentansprüche

1. Ein Verfahren (1100) zum Vorhersagen und/oder Erkennen von Steuersignalisierung, die das Risiko aufweist, ein Mobilkommunikationsnetz (100) zumindest teilweise zu überlasten, aufweisend:
Sammeln (1101) von Metriken durch eine spezifische
Mobilkommunikationsnetzkomponente über Steuerebenen-Verkehr zwischen einer ersten Mobilkommunikationsnetzkomponente (601) und einer oder mehreren zweiten Mobilkommunikationsnetzkomponenten (602, 604) des Mobilkommunikationsnetzes (100);
Empfangen (1102) einer Benachrichtigung durch die spezifische Mobilkommunikationsnetzkomponente, dass die erste
Mobilkommunikationsnetzkomponente (601) ein außergewöhnliches Betriebsverhaltensmuster erkannt hat;
als Reaktion auf den Empfang der Benachrichtigung, Vorhersagen und/oder Bestimmen (1103) durch die spezifische Mobilkommunikationsnetzkomponente unter Verwendung der gesammelten Metriken über Steuerverkehr und des in der empfangenen Benachrichtigung detektierten außergewöhnlichen Betriebsverhaltensmusters, ob eine Steuersignalisierung vorliegt, die das Risiko einer Überlastung der ersten Mobilkommunikationsnetzkomponente (601) und/oder der einen oder mehreren zweiten Mobilkommunikationsnetzkomponenten (602, 604) aufweist;
wobei die Metriken eine oder mehrere aufweisen von einer Anzahl und/oder Rate von Anforderungsnachrichten, einer Anzahl und/oder Rate von Antwortnachrichten, einer Anzahl und/oder Rate von Subskriptionsnachrichten, einer Anzahl und/oder Rate von Benachrichtigungsnachrichten sowie einer Anzahl und/oder Rate von Ablehnungen von Anforderungen; und
wobei das außergewöhnliche Betriebsverhaltensmuster eines oder mehrere ist von
eine Anzahl und/oder Rate von von der ersten Mobilkommunikationsnetzkomponente (601) von der einen oder den mehreren zweiten Mobilkommunikationsnetzkomponenten (602, 604) empfangenen Nachrichten liegt über einem vorbestimmten Signalisierungsschwellenwert; eine Last der ersten Mobilkommunikationsnetzkomponente (601) liegt über einem vorbestimmten Lastschwellenwert;
eine Anzahl von Dienstbereitstellungsinstanzen der ersten Mobilkommunikationsnetzkomponente (601) für die eine oder die mehreren zweiten Mobilkommunikationsnetzkomponenten (602, 604) liegt über einem vorbestimmten Dienstbereitstellungsschwellenwert;
ein Nachrichtenpufferfüllstand der ersten Mobilkommunikationsnetzkomponente (601) liegt über einem vorbestimmten Pufferschwellenwert;
eine Rate der Speicherallokation der ersten Mobilkommunikationsnetzkomponente (601) liegt über einem vorbestimmten Speicherallokationsschwellenwert;
eine Rate von Paketverlusten, die die erste Mobilkommunikationsnetzkomponente (601) erfährt, liegt über einem vorbestimmten Paketverlustschwellenwert;
eine Rate der Thread- und/oder Prozesserzeugung der ersten Mobilkommunikationsnetzkomponente (601) liegt über einem vorbestimmten Thread-/Prozesserzeugungsschwellenwert;
eine Massenspeicher-Eingabe-/Ausgabelatenz der ersten Mobilkommunikationsnetzkomponente (601) liegt über einem vorbestimmten Eingabe-/Ausgabelatenzschwellenwert; und
eine Anzahl von Transport Control Protocol- und/oder User Datagram Protocol-Sockets liegt über einem vorbestimmten Socket-Schwellenwert.

2. Das Verfahren nach Anspruch 1, wobei das außergewöhnliche Betriebsverhaltensmuster ein außergewöhnliches Betriebsverhaltensmuster der ersten Mobilkommunikationsnetzkomponente (601) ist.

3. Das Verfahren nach Anspruch 1 oder 2, wobei das außergewöhnliche Betriebsverhaltensmuster ein außergewöhnliches Muster des internen Betriebs der ersten Mobilkommunikationsnetzkomponente (601) aufweist.

4. Das Verfahren nach einem der Ansprüche 1 bis 3, wobei das außergewöhnliche Betriebsverhaltensmuster ein außergewöhnliches Signalisierungsmuster einer Signalisierung zwischen der einen oder den mehreren zweiten Mobilkommunikationsnetzkomponenten (602, 604) und der ersten Mobilkommunikationsnetzkomponente (601) aufweist.

5. Das Verfahren nach einem der Ansprüche 1 bis 4, wobei die erste Mobilkommunikationsnetzkomponente (601) eine Kernnetzfunktion eines Kernnetzes (103) des Mobilkommunikationsnetzes (100) ist und/oder wobei die eine oder die mehreren zweiten Mobilkommunikationsnetzkomponenten (602, 604) Kernnetzfunktionen des Kernnetzes (103) des Mobilkommunikationsnetzes (100) sind.

6. Das Verfahren nach einem der Ansprüche 1 bis 4, wobei die erste Mobilkommunikationsnetzkomponente (601) eine Kernnetzfunktion eines Kernnetzes (103) des Mobilkommunikationsnetzes (100) ist und/oder wobei die eine oder die mehreren zweiten Mobilkommunikationsnetzkomponenten ein oder mehrere Komponenten eines Funkzugangsnetzes (102) des Mobilkommunikationsnetzes (100) sind.

7. Das Verfahren nach einem der Ansprüche 1 bis 6, aufweisend das Vorhersagen und/oder Bestimmen, ob eine Steuersignalisierung vorliegt, die das Risiko einer Überlastung der ersten Mobilkommunikationsnetzkomponente (601) und/oder der einen oder mehreren zweiten Mobilkommunikationsnetzkomponenten (602, 604) aufweist, mittels eines maschinellen Lernmodells.

8. Das Verfahren nach Anspruch 7, wobei das maschinelle Lernmodell die Metriken als Eingabe erhält.

9. Das Verfahren nach Anspruch 7 oder 8, wobei die Benachrichtigung Informationen über das außergewöhnliche Betriebsverhaltensmuster aufweist und wobei das maschinelle Lernmodell die Informationen über das außergewöhnliche Betriebsverhaltensmuster als Eingabe erhält.

10. Das Verfahren nach einem der Ansprüche 1 bis 9, aufweisend, falls vorhergesagt und/oder bestimmt wird, dass eine Steuersignalisierung vorliegt, die das Risiko einer Überlastung der ersten Mobilkommunikationsnetzkomponente (601) und/oder der einen oder mehreren zweiten Mobilkommunikationsnetzkomponenten (602, 604) aufweist, das Auslösen eines Abschwächungsmechanismus, der dazu konfiguriert ist, die Last der ersten Mobilkommunikationsnetzkomponente (601) und/oder der einen oder mehreren zweiten Mobilkommunikationsnetzkomponenten (602, 604) zu reduzieren.

11. Ein Überlasterkennungs- und Abschwächungssystem eines Mobilkommunikationsnetzes (100), das dazu konfiguriert ist, das Verfahren nach einem der Ansprüche 1 bis 10 durchzuführen.

12. Das Überlasterkennungs- und Abschwächungssystem nach Anspruch 11, wobei die spezifische Mobilkommunikationsnetzkomponente als dritte Kommunikationsnetzkomponente (603) ausgebildet ist, die dazu konfiguriert ist, das Sammeln der Metriken, das Empfangen der Benachrichtigung sowie das Vorhersagen und/oder Bestimmen, ob eine Steuersignalisierung vorliegt, die das Risiko einer Überlastung der ersten Mobilkommunikationsnetzkomponente (601) und/oder der einen oder mehreren zweiten Mobilkommunikationsnetzkomponenten (602, 604) aufweist, durchzuführen, und wobei die dritte Kommunikationsnetzkomponente (603) dazu konfiguriert ist, die erste Kommunikationsnetzkomponente (601), die eine oder die mehreren zweiten Kommunikationsnetzkomponenten (602, 604) und/oder eine vierte Kommunikationsnetzkomponente (605) über ein Ergebnis der Vorhersage und/oder Bestimmung zu benachrichtigen.

13. Das Überlasterkennungs- und Abschwächungssystem nach Anspruch 12, wobei die erste Kommunikationsnetzkomponente (601), die eine oder die mehreren zweiten Kommunikationsnetzkomponenten (602, 604) und/oder die vierte Kommunikationsnetzkomponente (605) dazu konfiguriert sind, falls vorhergesagt und/oder bestimmt worden ist, dass eine Steuersignalisierung vorliegt, die das Risiko einer Überlastung der ersten Mobilkommunikationsnetzkomponente (601) und/oder der einen oder mehreren zweiten Mobilkommunikationsnetzkomponenten (602, 604) aufweist, einen Abschwächungsmechanismus auszulösen, der dazu konfiguriert ist, die Last der ersten Mobilkommunikationsnetzkomponente (601) und/oder der einen oder mehreren zweiten Mobilkommunikationsnetzkomponenten (602, 604) zu reduzieren.

14. Ein Computerprogramm und computerlesbares Medium mit Anweisungen, die, wenn sie von einem Computer ausgeführt werden, den Computer veranlassen, das Verfahren nach einem der Ansprüche 1 bis 10 durchzuführen.

## Revendications

1. Procédé (1100) pour prédire et/ou détecter une signalisation de commande ayant un risque de surcharger au moins partiellement un réseau de communication mobile (100), comprenant :
la collecte de mesures (1101), par un composant de réseau de communication mobile spécifique, concernant un trafic de plan de commande entre un premier composant de réseau de communication mobile (601) et un ou plusieurs deuxièmes composants de réseau de communication mobile (602, 604) du réseau de communication mobile (100) ;
la réception d'une notification (1102), par le composant de réseau de communication mobile spécifique, indiquant que le premier composant de réseau de communication mobile (601) a détecté un mode de fonctionnement exceptionnel ;
en réponse à la réception de la notification, la prédiction et/ou la détermination (1103), par le composant de réseau de communication mobile spécifique, en utilisant les mesures collectées concernant un trafic de commande et le mode de fonctionnement exceptionnel détecté de la notification reçue, du fait qu'il existe ou non une signalisation de commande ayant un risque de surcharger le premier composant de réseau de communication mobile (601) et/ou l'un ou les plusieurs deuxièmes composants de réseau de communication mobile (602, 604) ;
dans lequel les mesures incluent un ou plusieurs éléments parmi un nombre et/ou taux de messages de demande, un nombre et/ou taux de messages de réponse, un nombre et/ou taux de messages d'abonnement, un nombre et/ou taux de messages de notification, et un nombre et/ou taux de rejets de demande ; et
dans lequel le mode de fonctionnement exceptionnel est un ou plusieurs cas parmi
un nombre et/ou taux de messages reçus par le premier composant de réseau de communication mobile (601) en provenance de l'un ou des plusieurs deuxièmes composants de réseau de communication mobile (602, 604) est supérieur à un seuil de signalisation prédéterminé ;
une charge du premier composant de réseau de communication mobile (601) est supérieure à un seuil de charge prédéterminé ;
un nombre d'instances de fourniture de service du premier composant de réseau de communication mobile (601) pour l'un ou les plusieurs deuxièmes composants de réseau de communication mobile (602, 604) est supérieur à un seuil de fourniture de service prédéterminé ;
un niveau de tampon de message du premier composant de réseau de communication mobile (601) est supérieur à un niveau de tampon prédéterminé ;
un taux d'attribution de mémoire du premier composant de réseau de communication mobile (601) est supérieur à un seuil d'attribution de mémoire prédéterminé ;
un taux d'abandons de paquet subi par le premier composant de réseau de communication mobile (601) est supérieur à un seuil d'abandons de paquet prédéterminé ; un taux de création de fil et/ou de processus du premier composant de réseau de communication mobile (601) est supérieur à un seuil de création de fil/de processus prédéterminé ;
une latence d'entrée/de sortie de stockage de masse du premier composant de réseau de communication mobile (601) est supérieur à un seuil de latence d'entrée/de sortie prédéterminé ; et
un nombre de branchements de protocole de commande de transport et/ou de protocole de datagramme utilisateur est supérieur à un seuil de branchements prédéterminé.

2. Procédé de la revendication 1, dans lequel le mode de fonctionnement exceptionnel est un mode de fonctionnement exceptionnel du premier composant de réseau de communication mobile (601).

3. Procédé de la revendication 1 ou 2, dans lequel le mode de fonctionnement exceptionnel inclut un mode exceptionnel de fonctionnement interne du premier composant de réseau de communication mobile (601).

4. Procédé de l'une quelconque des revendications 1 à 3, dans lequel le mode de fonctionnement exceptionnel inclut un mode de signalisation exceptionnel d'une signalisation entre l'un ou les plusieurs deuxièmes composants de réseau de communication mobile (602, 604) et le premier composant de réseau de communication mobile (601).

5. Procédé de l'une quelconque des revendications 1 à 4, dans lequel le premier composant de réseau de communication mobile (601) est une fonction de réseau central d'un réseau central (103) du réseau de communication mobile (100) et/ou dans lequel l'un ou les plusieurs deuxièmes composants de réseau de communication mobile (602, 604) sont des fonctions de réseau central du réseau central (103) du réseau de communication mobile (100).

6. Procédé de l'une quelconque des revendications 1 à 4, dans lequel le premier composant de réseau de communication mobile (601) est une fonction de réseau central d'un réseau central (103) du réseau de communication mobile (100) et/ou dans lequel l'un ou les plusieurs deuxièmes composants de réseau de communication mobile sont un ou plusieurs composants d'un réseau d'accès radio (102) du réseau de communication mobile (100).

7. Procédé de l'une quelconque des revendications 1 à 6, comprenant la prédiction et/ou la détermination du fait qu'il existe ou non une signalisation de commande ayant un risque de surcharger le premier composant de réseau de communication mobile (601) et/ou l'un ou les plusieurs deuxièmes composants de réseau de communication mobile (602, 604) au moyen d'un modèle d'apprentissage machine.

8. Procédé de la revendication 7, dans lequel le modèle d'apprentissage machine reçoit les mesures en tant qu'entrée.

9. Procédé de la revendication 7 ou 8, dans lequel la notification inclut des informations concernant le mode de fonctionnement exceptionnel et dans lequel le modèle d'apprentissage machine reçoit les informations concernant le mode de fonctionnement exceptionnel en tant qu'entrée.

10. Procédé de l'une quelconque des revendications 1 à 9, comprenant, au cas où il serait prédit et/ou déterminé qu'il existe une signalisation de commande ayant un risque de surcharger le premier composant de réseau de communication mobile (601) et/ou l'un ou les plusieurs deuxièmes composants de réseau de communication mobile (602, 604), le déclenchement d'un mécanisme de mitigation configuré pour réduire la charge du premier composant de réseau de communication mobile (601) et/ou de l'un ou des plusieurs deuxièmes composants de réseau de communication mobile (602, 604).

11. Système de détection et de mitigation de surcharge d'un réseau de communication mobile (100) configuré pour réaliser le procédé de l'une quelconque des revendications 1 à 10.

12. Système de détection et de mitigation de surcharge de la revendication 11, comprenant le composant de réseau de communication mobile spécifique en tant que troisième composant de réseau de communication (603) configuré pour réaliser la collecte des mesures, la réception de la notification et la prédiction et/ou la détermination du fait qu'il existe ou non une signalisation de commande ayant un risque de surcharger le premier composant de réseau de communication mobile (601) et/ou l'un ou les plusieurs deuxièmes composants de réseau de communication mobile (602, 604) et configuré pour effectuer la notification au premier composant de réseau de communication (601), à l'un ou aux plusieurs second composants de réseau de communication (602, 604), et/ou à un quatrième composant de réseau de communication (605), en ce qui concerne un résultat de la prédiction et/ou de la détermination.

13. Système de détection et de mitigation de surcharge de la revendication 12, dans lequel le premier composant de réseau de communication (601), l'un ou les plusieurs deuxièmes composants de réseau de communication (602, 604), et/ou le quatrième composant de réseau de communication (605) sont configurés pour, au cas où il aurait été prédit et/ou déterminé qu'il existe une signalisation de commande ayant un risque de surcharger le premier composant de réseau de communication mobile (601) et/ou l'un ou les plusieurs deuxièmes composants de réseau de communication mobile (602, 604), déclencher un mécanisme de mitigation configuré pour réduire la charge du premier composant de réseau de communication mobile (601) et/ou de l'un ou des plusieurs deuxièmes composants de réseau de communication mobile (602, 604).

14. Programme d'ordinateur et support lisible par ordinateur incluant des instructions, qui, lorsqu'elles sont exécutées par un ordinateur, amènent l'ordinateur à réaliser le procédé de l'une quelconque des revendications 1 à 10.
